# EUROPÄISCHE PATENTSCHRIFT

(11) **EP 3 374 174 B1**
(45) Veröffentlichungstag und Bekanntmachung des Hinweises auf die Patenterteilung: **20.05.2020**
(21) Anmeldenummer: 16794922.1
(22) Anmeldetag: 21.10.2016
(51) Int. Cl.: B31B 70/60, B31B 70/64, B31B 70/81, B31B 150/20, B31B 160/10, B31B 170/00

(54) **SACKMUNDEINFASSUNG**
BAG-OPENING SURROUND
BORDAGE D'OUVERTURE DE SACS

(30) Priorität: 09.11.2015 AT 5020415 U
(43) Veröffentlichungstag der Anmeldung: 19.09.2018
(73) Patentinhaber: Starlinger & Co Gesellschaft m.b.H., 1060 Wien (AT)
(72) Erfinder: ADRIGAN, Hermann, 2721 Bad Fischau-Brunn (AT)
(74) Vertreter: Margotti, Herwig Franz
(86) Internationale Anmeldenummer: PCT/AT2016/060086
(87) Internationale Veröffentlichungsnummer: WO 2017/079772

(56) Entgegenhaltungen:
- US-A- 3 534 901
- US-A- 3 915 787
- US-A- 4 207 983
- US-A- 4 278 488

## Beschreibung

Die vorliegende Erfindung betrifft ein Verfahren zum Anbringen eines Materialbandes an ein Schlauchstück aus Kunststoffgewebe, insbesondere Polyolefin- oder Polyestergewebe, das an einem ersten Ende verschlossen sein kann. Weiters betrifft die vorliegende Erfindung eine Vorrichtung zum Anbringen eines Materialbandes an ein Schlauchstück aus Kunststoffgewebe, insbesondere Polyolefin- oder Polyestergewebe, das an einem ersten Ende verschlossen sein kann.

Aufgrund ihrer hohen Festigkeit und ihrer Beständigkeit gegenüber äußeren Einflüssen wie etwa gegenüber der Witterung, haben sich Säcke aus Kunststoffgewebe zu einer beliebten Alternative zu Papiersäcken und Säcken aus Kunststofffolie entwickelt. Besonders bei unbeschichteten Gewebesäcken kann es jedoch im Bereich des Sackmundes zum Ausfransen kommen, wobei sich einzelne Bändchen aus dem Gewebeverbund lösen. Daher ist es weit verbreitet den Sackmund mit einem Saum zu versehen, wobei der Endbereich des Sackes nach außen oder innen umgefaltet wird und der umgefaltete Schlauchabschnitt durch Nähen, Kleben oder andere geeignete Verfahren am Sackkörper befestigt wird. Durch die Verstärkung des Materials im Bereich des Sackmundes ist ein derartiger Offensack außerdem leichter zu befüllen als ein Sack ohne Saum.

Ein Verfahren zur Einfassung des Sackmundes eines Gewebesackes, das ohne aufwendiges Umschlagen des Gewebes zur Bildung eines Saumes auskommt, wird beispielsweise in der EP 2 508 440 A1 beschrieben. Bei diesem Verfahren wird ein Gewebeschlauch in regelmäßigen Abständen mit einer Beschichtung versehen. Der Gewebeschlauch wird anschließend durch Schnitte quer zur Erstreckungsrichtung des Gewebeschlauchs in Schlauchstücke aufgeteilt, wobei die zuvor beschichteten Abschnitte nun einen eingefassten Sackmund bilden und das der Sackmundeinfassung gegenüberliegende untere Ende des Schlauchstücks vorzugsweise durch Nähen verschlossen wird. Nachteilig bei diesem Verfahren ist jedoch, dass die Verfahrensschritte Auftragen der Beschichtung, Schneiden des Gewebeschlauchs in Schlauchstücke und Verschließen des der Sackmundeinfassung gegenüberliegenden Endes zeitlich voneinander getrennt stattfinden, was einen komplexen Aufbau der entsprechenden Maschine zur Folge hat.

US 4 207 983 A und US 3 534 901 A offenbaren jeweils ein Verfahren zum Anbringen eines Bandes an ein Schlauchstück.

Die Patentschrift EP 2 683 617 B1 beschreibt ein Verfahren zum Verschließen von einem Ende eines Schlauchstücks aus Polyolefin-Gewebe. Bei diesem Verfahren wird ein V- oder U-förmig gefaltetes Materialband über ein Ende eines Schlauchstücks gezogen, sodass ein Überlappungsbereich entsteht, in welchen das V- oder U-förmig gefaltete Materialband den Endbereich des Schlauchstücks zwischen sich aufnimmt. Durch Einbringen von thermischer Energie, vorzugsweise in Form von Heißluft, in diesen besagten Überlappungsbereich wird das Materialband an das Schlauchstückende angeschweißt und das Ende somit verschlossen. Dieses Verfahren ist zwar dazu geeignet, einen Offensack derart zu verschließen, dass ein Ausfransen ausgeschlossen ist, jedoch kann nach dem Überziehen des Materialbandes kein Füllgut mehr durch dieses Sackende eingefüllt werden.

Daher ist es die Aufgabe der vorliegenden Erfindungen ein Verfahren bzw. eine Vorrichtung zum Anbringen eines Materialbandes an ein Schlauchstück aus Kunststoffgewebe zur Verfügung zu stellen, das die zuvor genannten Nachteile des Standes der Technik überwindet. Dies wird durch ein Verfahren nach Anspruch 1 und eine Vorrichtung nach Anspruch 4 ermöglicht.

Erfindungsgemäß wird diese Aufgabenstellung dadurch gelöst, dass in einer ersten Ausführungsform der vorliegenden Erfindung ein V- oder U-förmig gefaltetes Materialband in einem Endbereich über ein Ende eines Schlauchstücks gezogen wird, sodass ein Überlappungsbereich entsteht, in welchen das V- oder U-förmig gefaltete Materialband den Endbereich des Schlauchstücks zwischen sich aufnimmt. Durch Einbringen von thermischer Energie, vorzugsweise in Form von Heißluft, in diesen besagten Überlappungsbereich und anschließendes Andrücken wird das Materialband im Endbereich an das Schlauchstückende angeschweißt und das Ende somit verschlossen. Es ist jedoch außerdem ein bewegliches Messer vorgesehen, welches das Materialband längs zur Erstreckungsrichtung des Materialbandes durchtrennt bzw. schlitzt, sodass die durch das Materialband verbundenen Lagen des Schlauchstücks wieder voneinander getrennt werden und ein Befüllen des Schlauchstücks durch dieses Ende möglich ist.

In einer zweiten Ausführungsform werden zwei Materialbänder an das Ende des Schlauchstücks herangeführt, wobei ein erstes Materialband an eine erste Lage des Schlauchstücks und ein zweites Materialband an eine untere Lage des Schlauchstücks gebracht werden. Durch Einbringen von thermischer Energie, vorzugsweise in Form von Heißluft, werden das erste Materialband und das zweite Materialband jeweils mit der Oberfläche im Endbereich des Schlauchstücks thermisch miteinander verschweißt. Bei dieser zweiten Ausführungsform sind keine Trennmittel für die Herstellung der Sackmundeinfassung erforderlich.

In einer dritten Ausführungsform werden zwei V- oder U-förmig gefaltete Materialbänder an das Schlauchstückende zugeführt. Das erste V- oder U-förmig gefaltete Materialband wird so über das Ende des Schlauchstücks gezogen, dass ein Überlappungsbereich entsteht, in welchen das V- oder U-förmig gefaltete Materialband die erste Lage des Schlauchstückendes zwischen sich aufnimmt. Das zweite V- oder U-förmig gefaltete Materialband wird so über das Ende des Schlauchstücks gezogen, dass ein Überlappungsbereich entsteht, in welchen das V- oder U-förmig gefaltete Materialband die untere Lage des Schlauchstückendes zwischen sich aufnimmt. Hierfür müssen die beiden aneinander anliegenden Lagen des Schlauchstücks im Endbereich des Schlauchstücks voneinander getrennt werden. Eine Vorrichtung, die dieses Trennen ermöglicht, ist bekannt und beispielweise in der EP 2 711 164 A1 beschrieben. Durch Einbringen von thermischer Energie, vorzugsweise in Form von Heißluft, in die Überlappungsbereiche hinein und anschließendes Andrücken mittels Andrückmittel werden die Materialbänder mit dem Ende des Schlauchstücks verbunden, wobei der erste Abschnitt des ersten Materialbandes mit der Oberseite der ersten Lage des Schlauchstücks, der zweite Abschnitt des ersten Materialbandes mit der Unterseite des ersten Schlauchstücks, der erste Abschnitt des zweiten Materialbandes mit der Oberseite der zweiten Lage des Schlauchstücks und der zweite Abschnitt des zweiten Materialbandes mit der Unterseite der zweiten Lage des Schlauchstücks verschweißt werden.

Bei allen beschriebenen Ausführungsformen kann zeitgleich mit dem Anbringen des Materialbandes an das in den Figuren oben dargestellte zweite Ende des Schlauchstücks ein Verschluss an ein in den Figuren unten dargestelltes erstes Ende des Schlauchstücks angebracht werden. Vorteilhaft ist es hierbei, wenn ein Verschluss gemäß dem in der Patentschrift EP 2 683 617 B1 beschriebenen Verfahren angebracht wird, da so weniger verschiedene Baugruppen benötigt werden. Außerdem wird dem so produzierten Sack durch seine Symmetrie ein ansprechendes Aussehen verliehen. Es können aber auch alle anderen gängigen Verschlussmethoden angewendet werden, wie z.B. Umfalten und Abnähen, Formung eines Kreuzbodens mit oder ohne Deckblatt, Double Roll & Tape, etc..

Vorteilhaft besteht das Materialband aus Kunststoffgewebe, insbesondere Polyolefin- oder Polyester-Gewebe. Dabei ist die dem Schlauchstück zugewandte Seite des Materialbandes gegebenenfalls mit einer Beschichtung versehen.

Weitere Einzelheiten, Merkmale und Vorteile der Erfindung ergeben sich aus der nachfolgenden Erläuterung von in den Figuren schematisch dargestellten Ausführungsformen. In den Zeichnungen zeigen:
- Figur 1A in einem schematischen Querschnitt ein erfindungsgemäßes Schlauchstück hergestellt gemäß einer ersten Ausführungsform der Erfindung, wobei ein Ende des Schlauchstücks mit einem U-förmig gefalteten Materialband verschlossen ist.
- Figur 1B in einem schematischen Querschnitt das erfindungsgemäße Schlauchstück hergestellt gemäß der ersten Ausführungsform der Erfindung, wobei ein erster Teilabschnitt und ein zweiter Teilabschnitt des Materialbandes teilweise voneinander getrennt sind.
- Figur 1C in einer schematischen Draufsicht eine erfindungsgemäße Vorrichtung gemäß der ersten Ausführungsform der Erfindung.
- Figur 2A in einem schematischen Querschnitt ein Schlauchstück hergestellt gemäß einer zweiten Ausführungsform.
- Figur 2B in einer schematischen Draufsicht eine Vorrichtung gemäß der zweiten Ausführungsform.
- Figur 3A in einem schematischen Querschnitt ein Schlauchstück hergestellt gemäß einer dritten Ausführungsform
- Figur 3B in einer schematischen Draufsicht eine Vorrichtung gemäß der dritten Ausführungsform.
- Figur 3C in einer perspektivischen Ansicht (links) sowie in einem vergrößerten Ausschnitt (rechts) ein Schlauchstück mit einer Sackmundeinfassung hergestellt gemäß der dritten Ausführungsform.
- Figur 4A in einem schematischen Querschnitt das erfindungsgemäßes Schlauchstück gemäß der ersten Ausführungsform der Erfindung, wobei ein erstes Ende des Schlauchstücks und ein zweites Ende des Schlauchstücks jeweils mit einem U-förmig gefalteten Materialband verschlossen sind.
- Figur 4B in einem schematischen Querschnitt das erfindungsgemäße Schlauchstück hergestellt gemäß der ersten Ausführungsform der Erfindung, wobei an beiden Enden des Schlauchstücks geschlossene Sackmundeinfassungen ausgebildet sind.
- Figur 4C in einer schematischen Draufsicht die erfindungsgemäße Vorrichtung gemäß der ersten Ausführungsform, wobei die Vorrichtung zusätzliche Faltemittel aufweist.

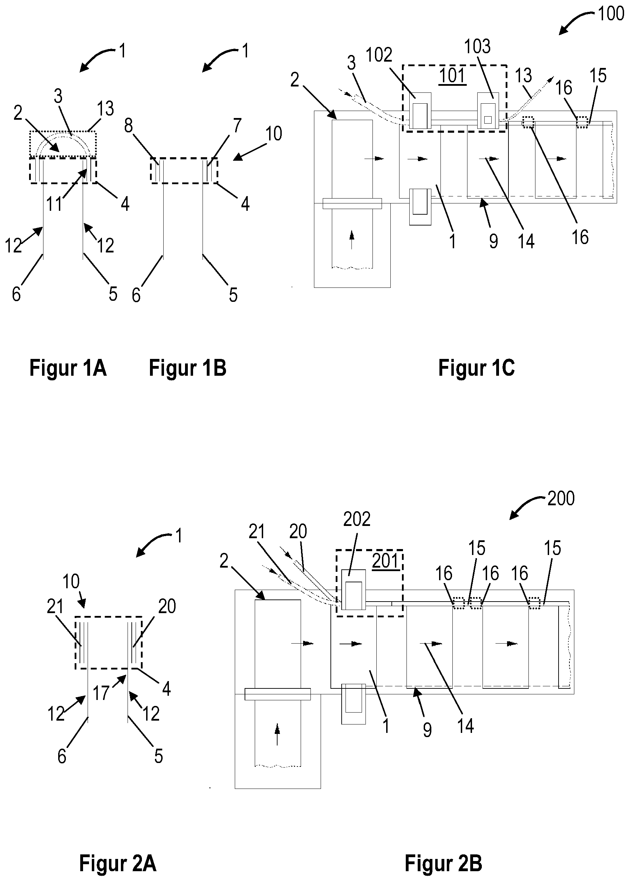

Figur 1A zeigt in einer nicht maßstabsgetreuen schematischen Darstellung ein Schlauchstück 1, das an einem zweiten Ende 2 mit einem U-förmig gefalteten Materialband 3 verschlossen ist. In einem Endbereich 4, in welchem das U-förmig gefaltete Materialband 3 das Schlauchstück 1 überlappt und zwischen sich aufnimmt, sind Schlauchstück 1 und Materialband 3 thermisch miteinander verschweißt. In Figur 1B sind ein erster Teilabschnitt 7 und ein zweiter Teilabschnitt 8 des Materialbandes 3 teilweise voneinander getrennt, und bilden aufgrund der Verbindungen an Überstandsbereichen 16 eine geschlossene Sackmundeinfassung 10.

Figur 1C zeigt in einer nicht maßstabsgetreuen schematischen Draufsicht eine erfindungsgemäße Vorrichtung 100 zum Anbringen des Materialbandes 3 an das Schlauchstück 1. Das Schlauchstück 1 kann an einem ersten Ende 9 verschlossen sein. Mittel 101 zur Bildung einer Sackmundeinfassung umfassen Faltemittel 102 und Trennmittel 103.

Im Funktionsbereich der Faltemittel 102 wird das streifenförmige, beschichtete oder unbeschichtete Materialband 3 an den Endbereich 4 beziehungsweise an das zweite Ende 2 des Schlauchstücks 1 herangeführt, sodass es das Schlauchstück 1 im Endbereich 4 überlappt. Zeitgleich mit dem Heranführen des Materialbandes 3 wird durch Heizmittel im Funktionsbereich der Faltemittel 102 thermische Energie, beispielweise Heißluft, direkt in den Endbereich 4 eingebracht. Dabei wird die Energie auf der dem Schlauchstück 1 zugewandten Seite 11 des U-förmig gefalteten Materialbandes 3 und/oder der dieser dem Schlauchstück 1 zugewandten Seite 11 des U-förmig gefalteten Materialbandes 3 zugewandten Oberfläche 12 des Schlauchstücks 1 eingebracht. Hierdurch schmilzt das Materialband 3, gegebenenfalls eine Beschichtung des U-förmig gefalteten Materialbandes 3 und/oder die Oberfläche 12 des Schlauchstücks 1 ganz oder teilweise auf. Durch darauffolgendes Andrücken des U-förmig gefalteten Materialbands 3 an die Oberfläche 12 des Schlauchstücks 1 werden das U-förmig gefaltete Materialband 3 und die Oberfläche 12 des Schlauchstücks 1 im Endbereich 4 des Schlauchstücks 1 thermisch miteinander verschweißt. Hierdurch ist das Schlauchstück 1 an seinem zweiten Ende 2 verschlossen.

In einem nächsten Schritt erfolgt im Funktionsbereich der Trennmittel 103 ein teilweises Abtrennen eines Überstandes 13 von einem ersten Teilabschnitt 7 und von einem zweiten Teilabschnitt 8 des U-förmig gefalteten Materialbandes 3 entlang einer Erstreckungsrichtung 14 des U-förmig gefalteten Materialbandes 3, beispielsweise mittels eines beweglichen Messers. Hierdurch wird eine geschlossene Sackmundeinfassung gebildet und das zweite Ende 2 des Schlauchstücks 1 geöffnet. Im Funktionsbereich der Trennmittel 103 kann ein zusätzliches Abtrennen der Sackmundeinfassung 10 entlang eines Trennschnitts 15, der im Wesentlichen quer zur Erstreckungsrichtung 14 verläuft, erfolgen.

Figur 2A zeigt in einer nicht maßstabsgetreuen schematischen Darstellung ein Schlauchstück 1, das in einem Endbereich 4 ein erstes Materialband 20 aufweist, das die erste Lage 5 des Schlauchstücks 1 entlang seiner Oberfläche 12 des Schlauchstücks 1 überlappt, und das ein zweites Materialband 21 aufweist, das die zweite Lage 6 des Schlauchstücks 1 entlang seiner Oberfläche 12 überlappt. Das erste Materialband 20 und das zweite Materialband 21, die entlang von Überstandbereichen 16 thermisch miteinander verschweißt sind, bilden dabei eine geschlossene Sackmundeinfassung 10. Die Überstandlänge dieser Überstandbereiche 16 entspricht dabei jeweils im Wesentlichen dem halben Abstand der Schlauchstücke 1 zueinander. Gemäß einen weiteren Ausführungsbeispiel kann diese Überstandlänge beliebig gekürzt werden, indem im Funktionsbereich der Trennmittel 103 zwischen zwei Schlauchstücken 1 jeweils zwei Trennschnitte 15 durchgeführt werden, wodurch ein Zwischenstück herausgeschnitten wird.

Figur 2B zeigt in einer nicht maßstabsgetreuen schematischen Draufsicht eine Vorrichtung 200 zum Anbringen des ersten Materialbands 20 und des zweiten Materialbands 21 an das Schlauchstück 1. Das Schlauchstück 1 kann an seinem ersten Ende 9 verschlossen sein. Mittel 201 zur Bildung einer Sackmundeinfassung 10 umfassen Faltemittel 202.

Im Funktionsbereich der Faltemittel 202 werden das erste Materialband 20 und das zweite Materialband 21 an den Endbereich 4 beziehungsweise das Ende 2 des Schlauchstücks 1 herangeführt, wobei das erste Materialband 20 an die erste Lage 5 des Schlauchstücks 1 und das zweite Materialband 21 an die zweite Lage 6 des Schlauchstücks 1 gebracht werden. In Analogie zur ersten Ausführungsform werden das erste Materialband 20 und das zweite Materialband 21 jeweils mit der Oberfläche 12 des Schlauchstücks 1 im Endbereich 4 des Schlauchstücks 1 thermisch miteinander verschweißt. Bei dieser zweiten Ausführungsform sind keine Trennmittel für die Herstellung der Sackmundeinfassung 10 erforderlich. Gegebenenfalls erfolgt im Funktionsbereich der Faltemittel 202 ein Abtrennen der Sackmundeinfassung entlang eines Trennschnitts 15, der im Wesentlichen quer zur Erstreckungsrichtung 14 verläuft.

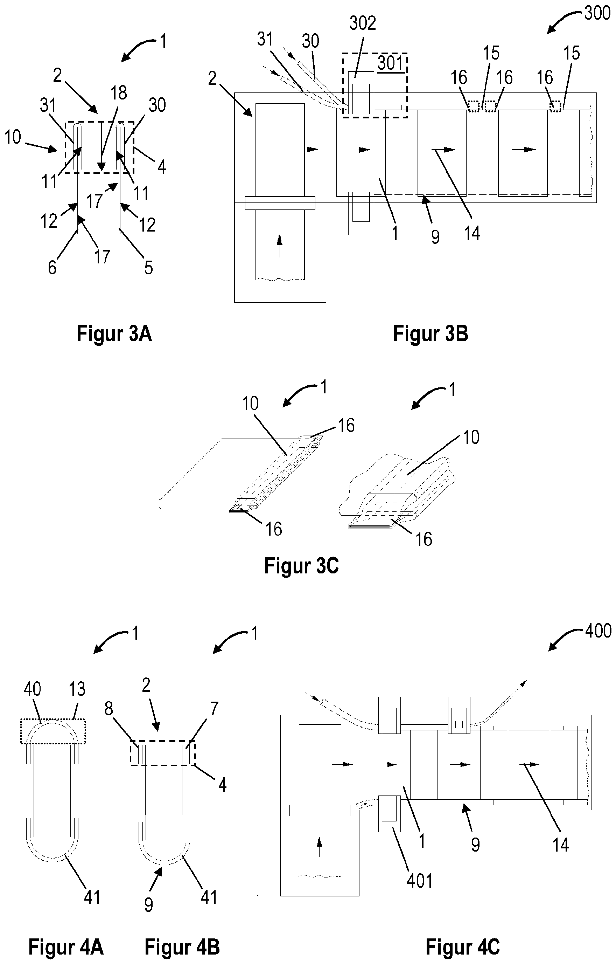

Figur 3A zeigt in einer nicht maßstabsgetreuen schematischen Darstellung ein Schlauchstück 1 das in einem Endbereich 4 ein erstes U-förmig gefaltetes Materialband 30, das die erste Lage 5 des Schlauchstücks 1 umschließt, wobei es im Endbereich 4 die erste Lage 5 des Schlauchstücks 1 zwischen sich aufnimmt, und ein zweites U-förmig gefaltetes Materialband 31 aufweist, das die zweite Lage 6 des Schlauchstücks 1 umschließt, wobei es im Endbereich 4 die zweite Lage 6 des Schlauchstückendes 1 zwischen sich aufnimmt. Das erste Materialband 30 und das zweite Materialband 31, die entlang von Überstandbereichen 16 thermisch miteinander verschweißt sind, bilden dabei eine geschlossene Sackmundeinfassung 10.

Figur 3B zeigt in einer nicht maßstabsgetreuen schematischen Draufsicht eine Vorrichtung 300 zum Anbringen des ersten Materialbands 30 und des zweiten Materialbands 31 an das Schlauchstück 1. Das Schlauchstück 1 kann an einem ersten Ende 9 verschlossen sein. Mittel 301 zur Bildung einer Sackmundeinfassung 10 umfassen Faltmittel 302.

Im Funktionsbereich der Faltemittel 302 sind Mittel vorgesehen, welche die beiden aneinander anliegenden Lagen, die erste Lage 5 und die zweite Lage 6, des Schlauchstücks 1 im Endbereich 4 des Schlauchstücks 1 voneinander trennen. Hierzu wird das Schlauchstück 1 im Endbereich 4 entlang einer Richtung 18, im Wesentlichen quer zur Erstreckungsrichtung 14, eingeschnitten. Danach werden das erste U-förmig gefaltete Materialband 30 und das zweite U-förmig gefaltete Materialband 31 an den Endbereich 4, beziehungsweise das zweite Ende 2 des Schlauchstücks 1, herangeführt, wobei das erste Materialband 30 die erste Lage 5 des Schlauchstücks 1 und das zweite Materialband 31 die zweite Lage 6 des Schlauchstücks 1 umschließt. Umschließen bedeutet in diesem Fall, dass im Endbereich 4 die der ersten Lage 5 des Schlauchstücks 1 zugewandte Seite 11 des ersten U-förmig gefalteten Materialbands 30 jeweils die Oberfläche 12 und die Innenfläche 17 der ersten Lage 5 des Schlauchstücks 1 überlappt, und dass im Endbereich 4 die der zweiten Lage 6 des Schlauchstücks 1 zugewandte Seite 11 des zweiten U-förmig gefalteten Materialbands 31 jeweils die Oberfläche 12 und die Innenfläche 17 der zweiten Lage 6 des Schlauchstücks 1 überlappt.

In Analogie zur ersten Ausführungsform werden das erste Materialband 30, beziehungsweise das zweite Materialband 31, mit der Oberfläche 12 des Schlauchstücks 1 im Endbereich 4 der ersten Lage 5 des Schlauchstücks 1, beziehungsweise der zweiten Lage 6 des Schlauchstücks 1, thermisch miteinander verschweißt. Bei dieser dritten Ausführungsform sind keine Trennmittel für die Herstellung der Sackmundeinfassung 10 erforderlich. Gegebenenfalls erfolgt im Funktionsbereich der Faltemittel 302 ein Abtrennen der Sackmundeinfassung entlang eines Trennschnitts 15, der im Wesentlichen quer zur Erstreckungsrichtung 14 verläuft. Hierdurch wird eine in sich geschlossene Sackmundeinfassung 10 erreicht, wobei der Sack zur Befüllung mit Füllgut offen bleibt. Diese Sackmundeinfassung 10 ist in Figur 3C in einer perspektivischen Ansicht (links) sowie in einem vergrößerten Ausschnitt (rechts) dargestellt.

In Analogie zur ersten Ausführungsform der Erfindung, beziehungsweise zu den Figuren 1A bis 1C, zeigen die Figuren 4A bis 4C neben dem Anbringen eines ersten Materialbandes 40 das zeitgleiche Anbringen eines zweiten Materialbandes 41 an das erste Ende 9 des Schlauchstücks 1. So kann ein Verschluss an das erste Ende 9 des Schlauchstücks 1 angebracht werden. Die Vorrichtung 400 weist hierzu zusätzliche Faltemittel 401 auf.

Zusätzlich kann das erfindungsgemäße Verfahren und/oder die erfindungsgemäße Vorrichtungen 100 auch für das Einfassen von End- oder Randbereichen anderer thermisch oder andersartig verbindbarer Kunststoffmaterialien oder Kunststofferzeugnisse, beispielsweise Kunststoffplanen, verwendet werden .

Es kann weiters erwähnt werden, dass das erfindungsgemäße Verfahren und/oder die erfindungsgemäße Vorrichtungen 100 auch für das Einfassen von End- oder Randbereichen anderer flexibler verbindbarer Materialien, beispielsweise künstliche oder natürliche Textil- oder Gewebestoffe, verwendet werden können.

## Patentansprüche

1. Verfahren zum Anbringen eines Materialbandes an ein Schlauchstück (1) aus beschichtetem oder unbeschichtetem Kunststoffgewebe, insbesondere Polyolefin- oder Polyester-Gewebe, welches Schlauchstück (1) an einem ersten Ende (9) verschlossen sein kann, wobei mindestens ein streifenförmiges, beschichtetes oder unbeschichtetes Materialband (3, 20, 30, 40) an einen Endbereich (4) eines zweiten Endes (2) des Schlauchstücks (1) herangeführt wird, sodass es im Endbereich (4) das zweite Ende (2) des Schlauchstücks (1) überlappt, und thermische Energie, vorzugsweise in Form eines heißen Gases, besonders bevorzugt in Form von Heißluft, direkt in den Endbereich (4) hinein, auf die dem Schlauchstück (1) zugewandte Seite (11) des mindestens einen Materialbandes (3, 20, 30, 40) und/oder auf die dieser Seite (11) des mindestens einen Materialbandes (3, 20, 30, 40) zugewandte Oberfläche (12) des Schlauchstücks (1) eingebracht, vorzugsweise eingeblasen, wird, und im Anschluss daran das zumindest eine Materialband (3, 20, 30, 40) sowie das Schlauchstück (1) im Endbereich (4) zusammengepresst werden, wobei die Einbringung der thermischen Energie zeitgleich mit dem Heranführen des mindestens einen Materialbandes (3, 20, 30, 40) an den Endbereich (4) des Schlauchstücks (1) geschieht, wobei mindestens ein Verfahrensschritt zur Bildung einer Sackmundeinfassung (10) aus dem mindestens einen Materialband (3, 20, 30, 40) vorgesehen ist, **dadurch gekennzeichnet, dass** die Verfahrensschritte zur Bildung der Sackmundeinfassung (10) ein V- oder U-förmiges Falten des Materialbandes (3, 40, 41), das Überziehen des mindestens einen Materialbandes (3, 40) im Endbereich (4) über das zweite Ende (2) des Schlauchstücks (1), sodass ein erster Teilabschnitt (7) des mindestens einen Materialbandes (3, 40) mit einer ersten Lage (5) des Schlauchstücks (1) und ein zweiter Teilabschnitt (8) des mindestens einen Materialbandes (3, 40) mit einer zweiten Lage (6) des Schlauchstücks (1) überlappt, und das zumindest teilweise Abtrennen eines Überstandes (13) vom ersten Teilabschnitt (7) und vom zweiten Teilabschnitt (8) des mindestens einen Materialbandes (3, 40), insbesondere durch Schlitzen entlang einer Erstreckungsrichtung (14) des mindestens einen Materialbandes (3, 40), umfassen.

2. Verfahren nach einem der vorhergehenden Ansprüche, **dadurch gekennzeichnet, dass** das Materialband (3) aus Kunststoffgewebe, insbesondere Polyolefin- oder Polyester-Gewebe besteht.

3. Verfahren nach einem der vorhergehenden Ansprüche, **dadurch gekennzeichnet, dass** die dem Schlauchstück (1) zugewandte Seite (11) des Materialbandes (3, 20, 21, 30, 31, 40, 41) mit einer Beschichtung versehen ist.

4. Vorrichtung (100, 200, 300, 400) zum Anbringen eines Materialbandes (3) an ein Schlauchstück (1) aus beschichtetem oder unbeschichtetem Kunststoffgewebe, insbesondere Polyolefin- oder Polyester-Gewebe, welches Schlauchstück (1) an einem ersten Ende (9) verschlossen sein kann, wobei Mittel zum Heranführen mindestens eines streifenförmigen, beschichteten oder unbeschichteten Materialbands (3, 20, 21, 30, 31, 40, 41) an einen Endbereich (4) eines zweiten Endes (2) des Schlauchstücks (1) vorgesehen sind, sodass das Materialband (3, 20, 21, 30, 31, 40) im Endbereich (4) des zweiten Endes (2) des Schlauchstücks (1) überlappt, und wobei Heizmittel zeitgleich mit dem Heranführen des mindestens einen Materialbandes (3, 20, 21, 30, 31, 40) thermische Energie direkt in den Endbereich (4) des Schlauchstücks (1) hinein, auf die dem Schlauchstück (1) zugewandte Seite (11) des mindestens einen Materialbandes (3, 20, 21, 30, 31, 40) und/oder auf die dieser Seite (11) des mindestens einen Materialbandes (3, 20, 21, 30, 31, 40) zugewandte Oberfläche (12) des Schlauchstücks (1) einbringen, und dass Andruckmittel zum Andrücken des mindestens einen Materialbands (3, 20, 21, 30, 31, 40) an die Oberfläche (12) des Schlauchstücks (1) vorgesehen sind, wobei die Vorrichtung (100, 200, 300, 400) Mittel (101, 201, 301) zur Bildung einer Sackmundeinfassung (10) umfasst, **dadurch gekennzeichnet, dass** die Mittel (101, 301) zur Bildung einer Sackmundeinfassung (10) Faltemittel (102, 401) zum V- oder U-förmigen Falten des Materialbandes (3, 40, 41) und zum Überziehen des Materialbandes (3,40) über den Endbereich (4) des Schlauchstücks (1), sodass ein erster Teilabschnitt (7) des Materialbandes (3, 40) mit einer ersten Lage (5) des Schlauchstücks (1) und ein zweiter Teilabschnitt (8) des Materialbandes (3, 40) mit einer zweiten Lage (6) des Schlauchstücks (1) überlappt, und Trennmittel (103) zum zumindest teilweisen Abtrennen eines Überstandes (13) des Materialbandes (3) entlang einer Erstreckungsrichtung (14) des Materialbandes (3), insbesondere ein bewegliches Messer, umfassen.

5. Vorrichtung (400) nach Anspruch 4, **dadurch gekennzeichnet, dass** Mittel zur Bildung eines Sackverschlusses des ersten Endes (9) vorgesehen sind und dass die Mittel zur Bildung der Sackmundeinfassung (10) und die Mittel zur Bildung des Sackverschlusses insbesondere im Wesentlichen zeitgleich zum Bearbeiten des gleichen Schlauchstücks (1) ausgebildet sind.

6. Sack mit Materialband (3), das nach einem Verfahren gemäß einem der Ansprüche 1 bis 3 befestigt wurde.

## Claims

1. A method for attaching a material band to a tubular piece (1) made of a coated or uncoated plastic fabric, in particular a polyolefin or polyester fabric, which tubular piece (1) may be closed at a first end (9), wherein at least one band-shaped, coated or uncoated material band (3, 20, 30, 40) is approached to an end region (4) of a second end (2) of the tubular piece (1), so that it overlaps the second end (2) of the tubular piece (1) in the end region (4), and thermal energy, preferably in the form of hot gas, particularly preferred in the form of hot air, is introduced, preferably blown, directly into the end region (4) onto the side (11) of the at least one material band (3, 20, 30, 40) facing the tubular piece (1) and/or onto the surface (12) of the tubular piece (1) facing this side (11) of the at least one material band (3, 20, 30, 40), whereafter the at least one material band (3, 20, 30, 40) and the tubular piece (1) are compressed in the end region (4), the introduction of thermal energy taking place simultaneously with the approach of the at least one material band (3, 20, 30, 40) to the end region (4) of the tubular piece (1), wherein at least on process step is provided for forming a sack mouth surround (10) from the at least one material band (3, 20, 30, 40), **characterized in that** the process steps for forming the sack mouth surround (10) comprise folding the material band (3, 40, 41) in a V or U shape, pulling the at least one material band (3,40) over the second end (2) of the tubular piece (1) in the end region (4), so that a first subsection (7) of the at least one material band (3, 40) overlaps with a first layer (5) of the tubular piece (1) and a second subsection (8) of the at least one material band (3, 40) overlaps with a second layer (6) of the tubular piece (1), and at least partially severing an overhang (13) from the first subsection (7) and from the second subsection (8) of the at least one material band (3, 40), in particular by slitting along an extension direction (14) of the at least one material band (3, 40).

2. The method according to any one of the preceding claims **characterized in that** the material band (3) is made of a plastic fabric, in particular a polyolefin or polyester fabric.

3. The method according to any one of the preceding claims **characterized in that** the side (11) of the material band (3, 20, 21, 30, 31, 40, 41) facing the tubular piece (1) is provided with a coating.

4. A device (100, 200, 300, 400) for attaching a material band (3) to a tubular piece (1) made of a coated or uncoated plastic fabric, in particular a polyolefin or polyester fabric, which tubular piece (1) may be closed at a first end (9), wherein means for approaching at least one band-shaped, coated or uncoated material band (3, 20, 30, 31, 40, 31) to an end region (4) of a second end (2) of the tubular piece (1) are provided, so that the material band (3, 20, 21, 30, 31, 40) overlaps the second end (2) of the tubular piece (1) in the end region (4), and wherein heating means introduce, simultaneously with the approach of the at least one material band (3, 20, 21, 30, 31, 40), thermal energy directly into the end region (4) of the tubular piece (1), onto the side (11) of the at least one material band (3, 20, 21, 30, 31, 40) facing the tubular piece (1) and/or onto the surface (12) of the tubular piece (1) facing this side (11) of the at least one material band (3, 20, 21, 30, 31, 40), and that press-on means for pressing the at least one material band (3, 20, 21, 30, 31, 40) onto the surface (12) of the tubular piece (1) are provided, wherein the device (100, 200, 300, 400) comprises means (101, 201, 301) for forming a sack mouth surround (10), **characterized in that** the means (101, 301) for forming a sack mouth surround (10) comprise folding means (102, 401) for folding the material band (3, 40, 41) in a V or U shape and for pulling the material band (3,40) over the end region (4) of the tubular piece (1), so that a first subsection (7) of the material band (3, 40) overlaps with a first layer (5) of the tubular piece (1) and a second subsection (8) of the material band (3, 40) overlaps with a second layer (6) of the tubular piece (1), and severing means (103) for at least partially severing an overhang (13) of the material band (3) along an extension direction (14) of the material band (3), in particular a movable blade.

5. The device (400) according to claim 4 **characterized in that** means for forming a sack closure of the first end (9) are provided and that the means for forming the sack mouth surround (10) and the means for forming the sack closure are adapted for essentially simultaneously processing the same tubular piece (1).

6. A sack with a material band (3) attached according to the method according to any one of the claims 1 to 3.

## Revendications

1. Procédé pour appliquer une bande de matière sur une pièce de tuyau flexible (1) en tissu synthétique revêtu ou non revêtu, en particulier en tissu de polyoléfine ou de polyester, ladite pièce de tuyau flexible (1) pouvant être fermée à une première extrémité (9), dans lequel on amène au moins une bande de matière (3, 20, 30, 40) revêtue ou non revêtue, en forme de ruban, à une région d'extrémité (4) d'une deuxième extrémité (2) de la pièce de tuyau flexible (1), de telle manière qu'elle recouvre dans la région d'extrémité (4) la deuxième extrémité (2) de la pièce de tuyau flexible (1), et on insuffle de l'énergie thermique, de préférence sous la forme d'un gaz chaud, de préférence encore sous la forme d'air chaud, directement dans la région d'extrémité (4), sur le côté (11) de ladite au moins une bande de matière (3, 20, 30, 40) tourné vers la pièce de tuyau flexible (1) et/ou sur la surface (12) de la pièce de tuyau flexible (1) tournée vers ce côté (11), et à la suite de cela on presse ensemble ladite au moins une bande de matière (3, 20, 30, 40) ainsi que la pièce de tuyau flexible (1) dans la région d'extrémité (4), dans lequel on opère l'apport de l'énergie thermique en même temps que l'amenée de ladite au moins une bande de matière (3, 20, 30, 40) sur la région d'extrémité (4) de la pièce de tuyau flexible (1), dans lequel il est prévu au moins une étape de procédé pour la formation du bordage d'ouverture de sac (10) avec ladite au moins une bande de matière (3, 20, 30, 40), **caractérisé en ce que** les étapes de procédé pour la formation du bordage d'ouverture de sac (10) comprennent un pliage en forme de V ou en forme de U de la bande de matière (3, 40, 41), le recouvrement de ladite au moins une bande de matière (3, 40) dans la région d'extrémité (4) au-dessus de la deuxième extrémité (2) de la pièce de tuyau flexible (1), de telle manière qu'une première zone partielle (7) de ladite au moins une bande de matière (3, 40) soit chevauchante avec une première couche (5) de la pièce de tuyau flexible (1) et qu'une deuxième zone partielle (8) de ladite au moins une bande de matière (3, 40) chevauche une deuxième couche (6) de la pièce de tuyau flexible (1), et la coupe au moins partielle de l'excédent (13) de la première zone partielle (7) et de la deuxième zone partielle (8) de ladite au moins une bande de matière (3, 40), en particulier par fendage le long d'une direction d'extension (14) de ladite au moins une bande de matière (3, 40).

2. Procédé selon l'une quelconque des revendications précédentes, **caractérisé en ce que** la bande de matière (3) se compose de tissu synthétique, en particulier de tissu de polyoléfine ou de tissu de polyester.

3. Procédé selon l'une quelconque des revendications précédentes, **caractérisé en ce que** le côté (11) de la bande de matière (3, 20, 21, 30, 31, 40, 41) tourné vers la pièce de tuyau flexible (1) est pourvu d'un revêtement.

4. Dispositif (100, 200, 300, 400) pour appliquer une bande de matière (3) sur une pièce de tuyau flexible (1) en tissu synthétique revêtu ou non revêtu, en particulier un tissu de polyoléfine ou de polyester, ladite pièce de tuyau flexible (1) pouvant être fermée à une première extrémité (9), dans lequel il est prévu des moyens pour amener au moins une bande de matière (3, 20, 21, 30, 31, 40, 41) revêtue ou non revêtue sur une région d'extrémité (4) d'une deuxième extrémité (2) de la pièce de tuyau flexible (1), de telle manière que la bande de matière (3, 20, 21, 30, 31, 40) chevauche dans la région d'extrémité (4) de la deuxième extrémité (2) de la pièce de tuyau flexible (1), et dans lequel des moyens de chauffage apportent de l'énergie thermique, en même temps que l'amenée de ladite au moins une bande de matière (3, 20, 21, 30, 31, 40), directement dans la région d'extrémité (4) de la pièce de tuyau flexible (1), sur le côté (11) de ladite au moins une bande de matière (3, 20, 21, 30, 31,40) tourné vers la pièce de tuyau flexible (1) et/ou sur la surface (12) de la pièce de tuyau flexible (1) tournée vers ce côté (11) de ladite au moins une bande de matière (3, 20, 21, 30, 31, 40), et en ce qu'il est prévu des moyens de pression pour presser ladite au moins une bande de matière (3, 20, 21, 30, 31, 40) sur la surface (12) de la pièce de tuyau flexible (1), dans lequel le dispositif (100, 200, 300, 400) comprend des moyens (101, 201, 301) pour la formation d'un bordage d'ouverture de sac (10), **caractérisé en ce que** les moyens (101, 301) pour la formation d'un bordage d'ouverture de sac (10) comprennent des moyens de pliage (102, 401) pour le pliage en forme de V ou en forme de U de la bande de matière (3, 40, 41) et pour recouvrir la bande de matière (3, 40) au-dessus de la région d'extrémité (4) de la pièce de tuyau flexible (1), de telle manière qu'une première zone partielle (7) de la bande de matière (3, 40) chevauche une première couche (5) de la pièce de tuyau flexible (1) et qu'une deuxième zone partielle (8) de la bande de matière (3, 40) chevauche une deuxième couche (6) de la pièce de tuyau flexible (1), et des moyens de coupe (103), en particulier un couteau mobile, pour découper au moins partiellement un excédent (13) de la bande de matière (3) le long d'une direction d'extension (14) de la bande de matière (3).

5. Dispositif (400) selon la revendication 4, **caractérisé en ce qu'**il est prévu des moyens pour la formation d'une fermeture de sac de la première extrémité (9), et **en ce que** les moyens pour la formation du bordage d'ouverture de sac (10) et les moyens pour la formation de la fermeture de sac sont configurés en particulier pour traiter essentiellement la même pièce de tuyau flexible (1).

6. Sac muni d'une bande de matière (3), qui a été fixée par un procédé selon l'une quelconque des revendications 1 à 3.
